# EUROPÄISCHE PATENTSCHRIFT

(11) **EP 3 275 300 B1**
(45) Veröffentlichungstag und Bekanntmachung des Hinweises auf die Patenterteilung: **28.10.2020**
(21) Anmeldenummer: 17180700.1
(22) Anmeldetag: 11.07.2017
(51) Int. Cl.: A01B 71/02, G06Q 10/00

(54) **VERFAHREN, TRAGBARES GERÄT UND KOMBINATION AUS EINER MOBILEN ARBEITSMASCHINE UND EINEM TRAGBAREN GERÄT ZUR UNTERSTÜTZUNG DES AUFFINDENS EINER ZU FEHLERBEHEBUNGS-, STÖRUNGSBESEITIGUNGS- ODER WARTUNGSARBEITEN AUFZUSUCHENDEN POSITION AN EINER MOBILEN ARBEITSMASCHINE ODER EINEM DAMIT GEKOPPELTEN GERÄT**
METHOD, PORTABLE DEVICE AND COMBINATION OF A MOBILE WORK DEVICE AND A PORTABLE DEVICE FOR ASSISTING WITH THE FINDING OF A POSITION ON A MOBILE WORK DEVICE FOR FAULT RECOVERY, TROUBLESHOOTING OR MAINTENANCE WORK ON A MOBILE WORK DEVICE OR A DEVICE COUPLED TO THE WORK DEVICE
PROCÉDÉ, APPAREIL PORTABLE ET COMBINAISON D'UNE MACHINE DE TRAVAIL MOBILE ET D'UN APPAREIL PORTABLE D'ASSISTANCE PERMETTANT DE DÉTERMINER UNE LOCALISATION AFIN D'EFFECTUER UN DÉPANNAGE, UN ANTIPARASITAGE OU DES TRAVAUX D'ENTRETIEN SUR UNE MACHINE DE TRAVAIL MOBILE OU UN APPAREIL COUPLÉ À CELLE-CI

(30) Priorität: 25.07.2016 DE 102016213584
(43) Veröffentlichungstag der Anmeldung: 31.01.2018
(73) Patentinhaber: Deere & Company, Moline, IL 61265 (US)
(72) Erfinder: Bueermann, Martin, 68163 Mannheim (DE)
(74) Vertreter: Holst, Sönke

(56) Entgegenhaltungen:
- EP-A1- 1 564 688
- EP-A1- 2 755 099
- EP-A1- 3 000 312
- EP-A1- 3 166 054
- DE-A1-102015 109 203
- US-A1- 2014 240 349

## Beschreibung

Die Erfindung betrifft ein Verfahren und eine Kombination aus einer mobilen Arbeitsmaschine und einem tragbaren Gerät zur Unterstützung des Auffindens einer zu Fehlerbehebungs-, Störungsbeseitigungs- oder Wartungsarbeiten aufzusuchenden Position an einer mobilen Arbeitsmaschine oder einem damit gekoppelten Gerät.

### Stand der Technik

Moderne Arbeitsmaschinen, wie Baumaschinen oder landwirtschaftliche Maschinen und insbesondere Erntemaschinen werden in zunehmendem Maße mit elektronisch gesteuerten Funktionen ausgestattet. Es sind demnach elektrisch oder elektrohydraulisch betätigte Aktoren vorhanden, die basierend auf Sensorwerten oder manuell in einen Bordcomputer eingegebenen Vorgaben eines Bedieners angesteuert werden. Diese Elektronisierung und Automatisierung erleichtert die Bedienung der Arbeitsmaschine, beinhaltet aber auch neue Fehlerquellen. Sobald nämlich ein Fehler in einem Sensor, einem Aktor, einer Eingabeeinrichtung, einer Steuerung oder einer Leistung oder Daten übertragenden Leitung vorliegt, fällt eine Funktion der Arbeitsmaschine oder die gesamte Arbeitsmaschine aus.

Üblicherweise sind derartige Arbeitsmaschinen mit bordeigenen Diagnose- oder Fehlererkennungssystemen ausgestattet, die derartige Fehler selbsttätig erkennen können. Im Fehlerfall wird einem Bediener über eine Anzeigeeinrichtung eine entsprechende Fehlernachricht in Form eines so genannten Diagnostic Trouble Codes (DTC) oder in einem beliebigen, anderen Format angezeigt. Der Bediener kann daraufhin in einem gedruckten oder elektronisch verfügbaren Handbuch nachsehen, was dieser Fehler bedeutet und ihn ggf. selbst beheben oder einen Kundendienst bestellen.

Die EP 2 755 099 A1 schlägt vor, eine derartige Fehlermeldung als maschinenlesbaren Code auf einer Anzeigeeinrichtung des Bordcomputers der Arbeitsmaschine anzuzeigen. Der Bediener kann diesen Code mit einem tragbaren Gerät, bei dem es sich insbesondere um ein Smartphone, einen Tablet-Computer oder Notebook handelt, abfotografieren und in einer lokalen oder online verfügbaren Datenbank weitere Hinweise zu dem Fehler und zu dessen Behebung in lesbarer Form abrufen. Der Bediener erfährt demnach, welche Schritte er zur Behebung des Fehlers durchführen kann.

Weiterhin wurde in der EP 1 332 658 A1 vorgeschlagen, einen Bediener einer Erntemaschine mit einem Handgerät auszustatten, mit dem er sich zu einer gewünschten Stelle der Erntemaschine begeben kann und dort vordefinierte, seiner jeweiligen Relativposition zugeordnete Testdurchläufe von Kontrollparametern der Erntemaschine auslösen kann.

Die DE 10 2015 109 203 A1 beschreibt ein Fehlerdiagnosesystem für ein Fahrzeug, bei dem Daten hinsichtlich eines zu behebenden Fehlers an ein Handgerät übermittelt werden. Auf dem Handgerät werden, wenn es an der Fehlerstelle ist, mittels einer "augmented reality" auf dem angezeigten, mit einer Kamera des Handgeräts aufgenommenen Bild der Fehlerstelle überlagerte Handlungshinweise gegeben.

Die nachveröffentlichte EP 3 166 054 A1 zeigt ein Handgerät, dem von einer Arbeitsmaschine die Orte eventueller zu behebender Störungen und Handlungsvorschläge zur Überwindung der Störung übermittelt werden. Die Handlungsvorschläge werden auf dem Handgerät mittels einer "augmented reality" auf dem angezeigten Bild der Arbeitsmaschine überlagert angezeigt.

### Aufgabe der Erfindung

Die bekannten Handbücher zur Fehlerbehebung sind, ob sie nun in gedruckter oder elektronischer Form auf dem Bordcomputer oder nach EP 2 755 099 A1 auf einem tragbaren Gerät vorliegen, zwar für erfahrene Bediener und Werkstattpersonal geeignet, um mögliche Fehlerstellen aufzufinden, jedoch können unerfahrene Bediener oftmals mit den dort angegebenen Hinweisen, bestimmte Elemente zu überprüfen, wenig anfangen, da ihnen die aufzusuchenden, referenzierten Elemente nicht bekannt sind. Auch gedruckte oder angezeigte Bilder mit den referenzierten Elementen helfen nicht immer weiter, wenn beispielsweise viele sehr ähnliche Elemente vorhanden sind, wie elektronische Steuereinheiten oder dgl. Die Vorgehensweise nach EP 1 332 658 A1 kann zwar helfen, gewisse Fehler zu finden, jedoch nur unter der Voraussetzung, dass der Bediener schon weiß, an welcher Stelle er nachsehen muss. Demnach muss auch hier der Bediener schon über eine hinreichende Erfahrung mit der jeweiligen Maschine verfügen. Aus der DE 10 2015 109 203 A1 geht nicht im Einzelnen hervor, wie der Bediener zu der Fehlerstelle geleitet wird und bei der EP 3 166 054 A1 wird zwar das Bild der Arbeitsmaschine mit dem überlagerten Fehlerhinweis angezeigt, jedoch muss der Bediener die Fehlerstelle allein anhand des angezeigten Bildes finden, was ebenfalls fehlerträchtig ist.

Ähnliche Probleme, bestimmte Positionen an einer Arbeitsmaschine aufzufinden, stellen sich nicht nur bei der Fehlersuche und -behebung, wie beschrieben, sondern auch wenn Wartungsarbeiten durchzuführen sind oder Störungen, wie beispielsweise Blockagen von Erntegut zu beheben sind. Unerfahrene Bediener, wie sie insbesondere in der Landwirtschaft in der Erntezeit häufig eingesetzt werden, sind zu derartigen Arbeiten kaum oder nicht in der Lage. Das hat zur Folge, dass entweder die Arbeitsmaschine in nicht optimaler Weise eingesetzt wird, was zu weiteren Schäden führen kann, oder dass sie bis zum Eintreffen von qualifiziertem Werkstattpersonal stillstehen muss.

Die Aufgabe der vorliegenden Erfindung wird darin gesehen, ein Verfahren, ein tragbares Gerät und eine Kombination aus einer Arbeitsmaschine und einem tragbaren Gerät zur Unterstützung des Auffindens einer zur Fehlerbehebungs-, Störungsbeseitigungs- oder Wartungsarbeiten aufzusuchenden Position an einer Arbeitsmaschine oder einem damit gekoppelten Gerät bereitzustellen, welche die erwähnten Nachteile nicht oder in einem geringeren Maße aufweisen und es insbesondere einem wenig erfahrenen Bediener ermöglicht, eine möglicherweise fehlerhafte, zu entstörende oder zu wartende Stelle an der Arbeitsmaschine relativ leicht aufzufinden und wenn möglich zu beheben.

### Lösung

Diese Aufgabe wird erfindungsgemäß durch die Lehren der Patentansprüche 1 und 8 gelöst, wobei in den weiteren Patentansprüchen Merkmale aufgeführt sind, die die Lösung in vorteilhafter Weise weiterentwickeln.

Ein Verfahren zur Unterstützung des Auffindens einer zur Fehlerbehebungs-, Störungsbeseitigungs- oder Wartungsarbeiten aufzusuchenden Position an einer mobilen Arbeitsmaschine oder einem damit gekoppelten Gerät umfasst folgende Schritte:
Ermitteln von Daten hinsichtlich einer aufzusuchenden Position an der Arbeitsmaschine oder an einem damit gekoppelten Gerät durch ein Diagnosesystem,
Übertragen der Daten hinsichtlich der berechneten Position an ein tragbares Gerät, und
Ausgeben von auf den Daten basierenden Richtungshinweisen durch das tragbare Gerät im Sinne eines Hinführens des tragbaren Geräts zur Position des fehlerhaften Bauteils.

Mit anderen Worten erfasst ein Diagnosesystem, ob ein Fehler eines Bauteils der Arbeitsmaschine, bei der es sich beispielsweise um eine Baumaschine oder eine landwirtschaftliche Maschine und insbesondere um eine Erntemaschine handelt, oder eines damit verbundenen Geräts vorliegt, bzw. ob Wartungsarbeiten durchzuführen sind oder eine Störung zu beseitigen ist. Sollte ein Fehler oder eine Störung vorliegen oder Wartungsarbeiten anliegen, werde auch Daten hinsichtlich der Position des möglicherweise fehlerhaften Bauteils bzw. der Störung oder der Wartungsarbeiten ermittelt. Hierbei wird auf an sich bekannte Vorgehensweisen der Diagnose zurückgegriffen. Beispielsweise können Controller mit Diagnosesoftware ausgestattet sein und im Fehlerfall einen entsprechenden Fehlercode an das Diagnosesystem übersenden. Auch können Fehler durch beliebige Sensoren erfasst werden, z.B. unerwartete Positionen von Aktoren oder anderen Elementen, oder fehlende Rückmeldungen von Sensoren oder Aktoren werden erfasst. Gutstaus können anhand von Antriebsmomenten in Förderern beispielsweise durch Schlupferfassung identifiziert werden, und anstehende Wartungsarbeiten in an sich bekannter Weise z.B. anhand von Betriebsstunden detektiert werden. Anhand der erwähnten Signale und einer Datenbank des Diagnosesystems wird ggf. ein Fehler oder eine Störung oder Wartungsarbeit identifiziert. Das Diagnosesystem kann sich an Bord der Arbeitsmaschine befinden oder im Abstand davon, z.B. auf einem ortsfesten Server, an den die Arbeitsmaschine fortlaufend die erwähnten Daten und Messwerte überträgt. In der Datenbank des Diagnosesystems oder einer anderen Datenbank, die sich auf der Arbeitsmaschine oder an einem beliebigen anderen Ort befinden kann, sind nicht nur der Fehler oder die Störung oder Wartungsarbeit und das betreffende Bauteil, sondern auch die zugehörige Position an der Arbeitsmaschine oder am Gerät eingetragen. Daten hinsichtlich dieser Position werden an ein tragbares Gerät übertragen, das insbesondere als Datenbrille, Smartphone oder Tablet-Computer oder Notebook ausgeführt sein kann. Bei diesen Daten kann es sich um Angaben der aufzusuchenden Position relativ zu einer Referenzposition an der Arbeitsmaschine handeln oder um beliebige andere Daten, die das Auffinden der aufzusuchenden Position ermöglichen. Das tragbare Gerät gibt daraufhin (akustische oder optische) Richtungshinweise aus, die es dem Bediener ermöglichen, das tragbare Gerät zur aufzusuchenden Position zu führen und somit selbst an diese Position zu gelangen. Dort kann der Bediener versuchen, den Fehler zu beheben, was in einfacheren Fällen, wie bei Wackelkontakten an Steckverbindern, sogar ohne spezielles Werkzeug und Ersatzteile möglich sein kann, bzw. die Störung beseitigen oder die Wartungsarbeiten durchführen. Hierzu ist in einem Speicher des tragbaren Geräts ein geeignetes Programm (app) abgelegt, das insbesondere in an sich bekannter Weise auf das tragbare Gerät heruntergeladen werden kann.

Auf diese Weise wird das Hinführen eines Bedieners an die aufzusuchende Position wesentlich erleichtert, denn der Bediener benötigt keinerlei oder nur wenig Vorkenntnisse hinsichtlich der Einzelheiten der Arbeitsmaschine und wird dennoch durch das tragbare Gerät auf einfache Weise an die gewünschte Stelle geleitet. Diese Vorgehensweise kann einerseits im Einsatz der Arbeitsmaschine durch deren Bediener genutzt werden, andererseits aber auch durch Werkstattpersonal in der Werkstatt oder am Einsatzort bei Reparatur- oder Wartungsarbeiten.

Der Schritt des Ausgebens von Richtungshinweisen beinhaltet, dass zunächst das tragbare Gerät zu einem Referenzpunkt leitende Richtungshinweise ausgegeben werden, dass das Erreichen des Referenzpunktes durch das tragbare Gerät verifiziert wird und dass schließlich das tragbare Gerät ausgehend vom Referenzpunkt zum fehlerhaften Bauteil führende Richtungshinweise durch das tragbare Gerät ausgegeben werden. Der Bediener und das tragbare Gerät werden somit nicht direkt zur aufzusuchenden Position geleitet, sondern zunächst zu einem Referenzpunkt, der vorzugsweise relativ leicht aufgefunden werden kann. Hierbei kann es sich um einen beliebigen, möglichst prominenten Punkt handeln, wie beispielsweise um eine Markierung an einem Längs- oder Querträger o.ä. Dort wird zunächst verifiziert, dass der Referenzpunkt tatsächlich erreicht wurde, z.B. durch ein Abfotografieren des Referenzpunkts durch das tragbare Gerät und einen Vergleich mit aus dem Foto abgeleiteten Daten mit abgespeicherten Daten. Vom Referenzpunkt aus wird das tragbare Gerät und somit auch der Bediener dann zum fehlerhaften Bauteil geleitet.

Der Schritt des Ermittelns einer aufzusuchenden Position kann das Ermitteln mehrerer in Frage kommender Positionen beinhalten, wie im Falle einer möglicherweise fehlerhaften elektrischen Leitung mit mehreren Steckverbindern. Der Bediener wird in diesem Fall mit dem tragbaren Gerät nacheinander zu den Positionen geleitet. Dort kann er bestätigen, ob er einen Fehler gefunden hat. Ist das nicht der Fall, wird er zur nächsten Position geleitet, wo der beschriebene Vorgang wiederholt wird, bis alle Positionen abgearbeitet wurden.

Der Schritt des Übertragens von Daten hinsichtlich der aufzusuchenden Position an das tragbare Gerät kann ein Anzeigen eines Codes auf einer mit dem bordeigenen Diagnosesystem verbundenen Anzeigeeinrichtung und ein Abfotografieren oder Eingeben des Codes mit dem tragbaren Gerät umfassen. Der Code ermöglicht die Bestimmung der aufzusuchenden Position. Der Code kann direkt die aufzusuchende Position angeben oder lediglich einen allgemeinen Fehlercode. Im letztgenannten Fall kann das tragbare Gerät die aufzusuchende Position anhand eines Vergleichs des eingelesenen Codes mit im tragbaren Gerät abgespeicherten Codes und zugehörigen Daten hinsichtlich der aufzusuchenden Position ermitteln. Eine derartige Abfrage kann auch durch das tragbare Gerät über eine Datenfernübertragung von einer externen Datenbank (z.B. über Internet) oder einer Datenbank des Diagnosesystems erfolgen. Es wäre auch denkbar, die Daten hinsichtlich der aufzusuchenden Position vom bordeigenen Diagnosesystem drahtlos über ein beliebiges Protokoll, wie Bluetooth, auf das tragbare Gerät zu übertragen.

Um das tragbare Gerät an die aufzusuchende Position zu führen, bietet es sich an, die Arbeitsmaschine und das tragbare Gerät jeweils mit einem Positionsbestimmungssystem auszustatten und das tragbare Gerät mit Positionsdaten von der Arbeitsmaschine zu beaufschlagen.

Das tragbare Gerät kann nach dem Erreichen der aufzusuchenden Position Handlungsanweisungen an den Bediener zur Behebung des Fehlers wiedergeben.

### Ausführungsbeispiel

In den Zeichnungen ist ein nachfolgend näher beschriebenes Ausführungsbeispiel der Erfindung dargestellt. Es zeigt:
- Fig. 1: eine schematische seitliche Ansicht einer landwirtschaftlichen Arbeitsmaschine in Form eines Mähdreschers,
- Fig. 2: eine schematische Ansicht eines tragbaren Geräts, und
- Fig. 3: ein Flussdiagramm für eine Vorgehensweise zur Auffindung einer bestimmten Position an der Arbeitsmaschine zur Fehlerbehebung oder Wartungs- oder Störungsbeseitigung.

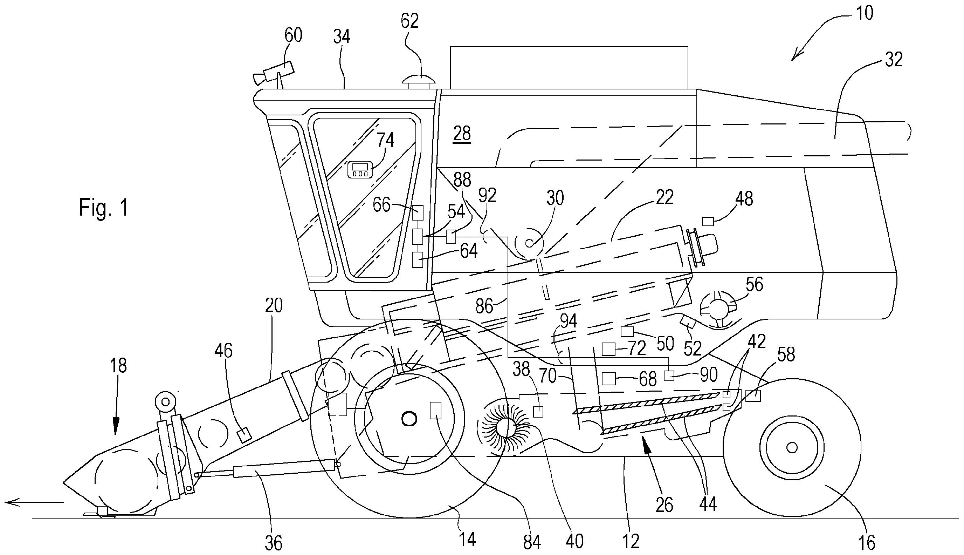

Die Figur 1 zeigt eine selbstfahrende und somit mobile landwirtschaftlichen Arbeitsmaschine 10 in Form eines Mähdreschers mit einem Fahrgestell 12, das sich über angetriebene vordere Räder 14 und lenkbare rückwärtige Räder 16 auf dem Boden abstützt und von diesen fortbewegt wird. Die Räder 14, 16 werden mittels nicht gezeigter Antriebsmittel in Drehung versetzt, um die Arbeitsmaschine 10 z. B. über ein abzuerntendes Feld oder eine Straße zu bewegen. Im Folgenden beziehen sich Richtungsangaben, wie vorn und hinten, auf die Fahrtrichtung V des Mähdreschers 10 im Erntebetrieb, die in der Figur 1 nach links verläuft.

An den vorderen Endbereich des Mähdreschers ist ein Gerät in Form eines Erntevorsatzes 18 in Form eines Schneidwerks abnehmbar angeschlossen, um beim Erntebetrieb Erntegut in Form von Getreide oder andere, dreschbare Halmfrüchten von dem Feld zu ernten und es nach oben und hinten durch einen Schrägfördererzusammenbau 20 einem Axialdreschwerk 22 zuzuführen. Das im Axialdreschwerk 22 durch Dreschkörbe und Roste hindurchtretende, Körner und Verunreinigungen enthaltende Gemisch gelangt in eine Reinigungseinrichtung 26. Durch die Reinigungseinrichtung 26 gereinigtes Getreide wird mittels einer Körnerschnecke einem Körnerelevator zugeführt, der es in einen Korntank 28 befördert. Das gereinigte Getreide aus dem Korntank 28 kann durch ein Entladesystem mit einer Querschnecke 30 und einem Entladeförderer 32 entladen werden. Die genannten Systeme werden mittels eines Verbrennungsmotors angetrieben und von einem Bediener aus einer Fahrerkabine 34 heraus kontrolliert und gesteuert.

Ein Bordcomputer 54 kontrolliert (über nicht gezeigte Ventile) die Position eines Aktors 36 zur Veränderung der Höhe des Erntevorsatzes 18 über dem Boden, die Position eines Aktors 38 zur Verstellung der Drehzahl eines Gebläses 40 der Reinigungseinrichtung 26, von zwei Aktoren 42 zur Verstellung der Öffnungsweite von Sieben 44 der Reinigungseinrichtung 26 und eines Aktors 84 zur Vorgabe der Vortriebsgeschwindigkeit des Mähdreschers. Ein weiterer vom Bordcomputer 54 kontrollierter Aktor (nicht gezeigt) könnte die Höhe einer Haspel des Erntevorsatzes 18 vorgeben. Weiterhin kontrolliert ein Aktor 48 die Drehzahl des Axialdreschwerks 22 und ein Aktor 50 verstellt die Position des Dreschkorbs, um die Größe des Dreschspalts einzustellen. Die erwähnten Aktoren 36, 38, 42, 84, 48, 50 werden durch den Bordcomputer 54 verstellt.

Ein Durchsatzsensor 46 erfasst den Durchsatz im Schrägfördererzusammenbau 20, beispielsweise anhand eines Antriebsmoments eines Kettenförderers des Schrägförderers.

Ein erster Kornverlustsensor 52 erfasst die Menge der Verlustkörner im vom Axialdreschwerk 22 abgegebenen Erntegutrestestrom, der durch eine Auswurftrommel 56 direkt oder über einen Strohhäcksler (nicht gezeigt) an der Rückseite des Mähdreschers auf das Feld abgegeben wird. Ein zweiter Kornverlustsensor 58 erfasst die Menge der Verlustkörner im von Obersieb der Reinigungseinrichtung 26 abgegebenen Erntegutrestestrom, der durch den erwähnten Strohhäcksler oder einen separaten Kaffverteiler auf das Feld abgegeben wird. Eine Kamera 68 mit zugehöriger Bildverarbeitungseinrichtung ist einem Körnerelevator 70 zugeordnet, der das gereinigte Korn von der Reinigungseinrichtung 26 in den Korntank 28 verbringt. Ein Sensor 72 in Form eines Nahinfrarotspektrometers blickt ebenfalls in den Körnerelevator 70, um den Anteil an Inhaltsstoffen des in den Korntank 28 geförderten Korns, z.B. an Proteinen, zu messen. Die Sensoren 46, 52, 58 und 72 sind signalübertragend mit dem Bordcomputer 54 verbunden, was auch für eine nach vorn blickende Kamera 60 gilt, die zur Erfassung der Bestandsdichte und Lage der Bestandskante dient und mittels einer Bildverarbeitung Lenk- und Geschwindigkeitsvorgaben an den Bordcomputer 54 übergibt.

Der Bordcomputer 54 ist weiterhin mit einer Speichereinrichtung 64, einer Kommunikationseinrichtung 66, einer Positionsbestimmungseinrichtung 62 in Form einer Antenne zum Empfang von Signalen eines satellitenbasierten Positionsbestimmungssystems und mit einer Bedienerschnittstelle 74 mit Eingabemitteln (Tasten) und einer Anzeige verbunden.

Die Kommunikation des Bordcomputers 54 mit den Aktoren 38 und 42 erfolgt über eine Schnittstelle 88 und eine (z.B. unter einem beliebigen Protokoll, wie CAN oder ISO 11783 arbeitende) Busleitung 86 sowie einen Controller 90, der die Aktoren 38 und 42 ansteuert und auch mit den Sensoren 52 und 58 verbunden ist und deren Signale an den Bordcomputer 54 weitergibt. In die Busleitung 86 sind mehrere Steckverbindungen 92, 94 eingefügt. Weitere, nicht gezeigte Controller sind mit der Busleitung 86 verbunden und ihrerseits mit den anderen, oben erwähnten Aktoren 36, 84, 48 und 50 und den Sensoren 46, 68 und 72 verbunden.

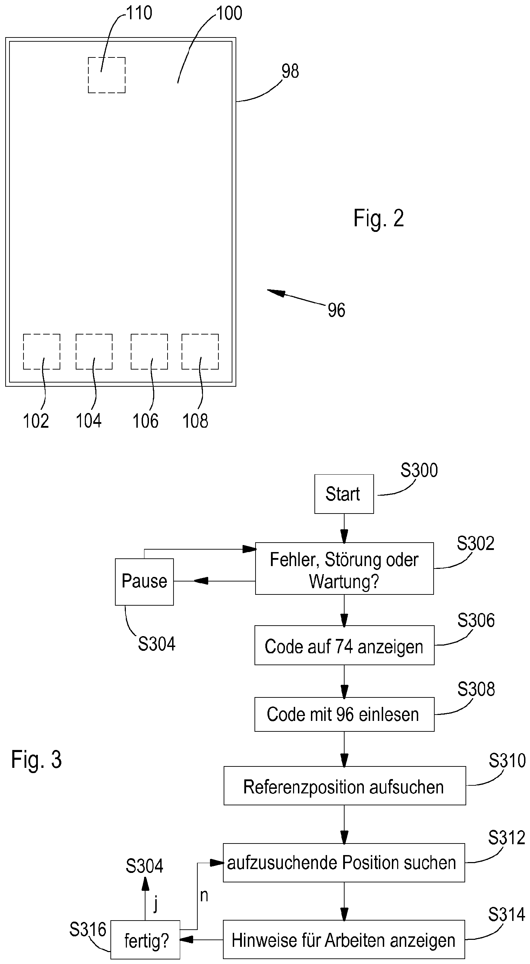

Die Figur 2 zeigt ein tragbares Gerät 96, bei dem es sich in der gezeigten Ausführungsform um ein so genanntes Smartphone handelt. Es umfasst ein Gehäuse 98 mit einer berührungsempfindlichen Anzeigeeinrichtung 100, einem Prozessor 102, einem Speicher 104, einer Kommunikationsschnittstelle 106, einem Positionsbestimmungssystem 108 und einer Kamera 110. Das tragbare Gerät 96 könnte auch als Datenbrille, Notebook, Laptop oder Tablet-Computer ausgeführt sein.

Der Bordcomputer 54 kann die Aktoren 38 und 42 nur kontrollieren, wenn die Busleitung 86 korrekt funktioniert und insbesondere die Steckverbindungen 92, 94 korrekt arbeiten. Der Bordcomputer 54 dient somit in an sich bekannter Weise auch als bordeigenes Diagnosesystem der Arbeitsmaschine 10. Um es dem Bediener zu erleichtern, eventuelle Fehler an der Arbeitsmaschine 10 aufzufinden und zu beheben, wird nach dem Flussdiagramm in Figur 3 vorgegangen.

Nach dem Start im Schritt S300 fragt der Bordcomputer 54 im Schritt S302 ab, ob ein Fehler, eine Störung oder eine anstehende Wartungsarbeit vorliegt. In diesem Schritt können über die Busleitung 86 übertragene Fehlercodes ausgewertet werden, die beispielsweise vom Controller 90 kommen können, der ggf. darauf hinweist, dass einer der Sensoren 52 oder 58 nicht plausible Werte abgibt. Der Bordcomputer 54 erkennt dann, dass an dem betreffenden Sensor 52 oder 58 ein Fehler (z.B. in einer Steckverbindung) oder eine Störung (z.B. hat sich Erntegut vor dem Sensor 52 oder 58 angesammelt) vorliegt. Analog erkennt der Bordcomputer 54, wenn die Busleitung 86 zwischen der Schnittstelle 88 und dem Controller 90 unterbrochen ist. Analog umfasst der Bordcomputer 54 einen Betriebsstundenzähler und erkennt, wann Wartungsarbeiten an bestimmten Bauteilen der Arbeitsmaschine 10 erforderlich sind, z.B. Schmierungen an Lagerstellen oder Reinigungsarbeiten an Filtern. Ergibt sich im Schritt 302, dass kein Fehler und keine Störung vorliegen und keine Wartungsarbeiten erforderlich sind, geht er nach einer Pause (Schritt S304) wieder zum Schritt S302 zurück.

Sollte sich im Schritt S302 hingegen herausstellen, dass gewisse Arbeiten an der Arbeitsmaschine 10 zur Fehler- oder Störungsbeseitigung oder Wartung durch den Bediener durchzuführen sind, folgt der Schritt S306, in dem der Bordcomputer 54 auf der Anzeige der Bedienerschnittstelle 74 einen Code anzeigt. Dieser Code kann als Strichcode oder QR-Code und/oder in Textform angezeigt werden. Der Code enthält Informationen über die durchzuführende Arbeit und die zugehörige Position.

Im folgenden Schritt S308 hat der Bediener die Möglichkeit, den angezeigten Code mit dem tragbaren Gerät 96 einzulesen, wozu er die Kamera 110 verwenden kann. Alternativ oder zusätzlich kann der Code auch über die Kommunikationseinrichtung 66 der Arbeitsmaschine 10 und die damit zusammenarbeitende Kommunikationsschnittstelle 106 des tragbaren Geräts 96 übertragen werden, oder der Bediener kann den in Textform auf der Anzeige der Bedienerschnittstelle 74 angezeigten Code mittels der berührungsempfindlichen Anzeigeeinrichtung 100 eintippen.

Im nun folgenden, optionalen Schritt S310 leitet das tragbare Gerät 96 den es haltenden Bediener zunächst zu einer Referenzposition, die sich beispielsweise an der linken Seite der Arbeitsmaschine 10 am Elevator 70 befinden kann. An der Referenzposition kann eine spezielle Markierung angebracht sein, z.B. ein Strich- oder QR-Code. Zur Führung des Bedieners kann das tragbare Gerät auf der Anzeigeeinrichtung 100 Texthinweise anzeigen, die den Bediener anweisen, sich aus der Kabine 34 auf den Erdboden zu begeben, die linke Abdeckung der Arbeitsmaschine 10 zu öffnen und sich bezüglich der Vorwärtsrichtung etwa mittig neben die Arbeitsmaschine 10 zu stellen. Zudem können auf der Anzeigeeinrichtung 100 Pfeile angezeigt werden, die den Bediener hinweisen, in welche Richtung er sich begeben soll. Auch können Bilder angezeigt werden, welche in zweidimensionaler oder perspektivischer Anzeige Teile der Arbeitsmaschine 10 (oder die ganze Arbeitsmaschine 10) und Hinweise, z.B. durch hervorgehobene Teile der Arbeitsmaschine oder Pfeile, zeigen, wohin der Bediener gehen soll, um ihm das Auffinden der Referenzposition zu erleichtern. Die Hinweise können alternativ oder zusätzlich auf akustische Weise ausgegeben werden.

Im Schritt S310 benötigt das tragbare Gerät 96 Informationen dazu, wo es sich selbst im Raum befindet und wo sich die Arbeitsmaschine 10 und insbesondere die Referenzposition im Raum befinden. Während beim tragbaren Gerät 96 grundsätzlich dreidimensionale Koordinaten zur Definition seiner Position ausreichen, die mittels dessen Positionsbestimmungssystems 108 gewonnen werden können, benötigt das tragbare Gerät neben dreidimensionalen Positionsdaten eines Referenzpunkts an der Arbeitsmaschine 10, bei welchem es sich beispielsweise um die Lage der Positionsbestimmungseinrichtung 62 handelt, auch noch Daten zur Orientierung der Arbeitsmaschine 10 im Raum oder in der horizontalen Ebene, die mittels historischer Signale der Positionsbestimmungseinrichtung 62 zur Rückverfolgung ihres Weges und somit ihrer Orientierung im Raum oder in der horizontalen Ebene und/oder eines Trägheitsnavigationssystems der Positionsbestimmungseinrichtung 62 und/oder einer zweiten Positionsbestimmungseinrichtung (nicht gezeigt) der Arbeitsmaschine 10 gewonnen werden können. Diese Positions- und Orientierungsdaten der Arbeitsmaschine 10 können über die Kommunikationseinrichtung 66 der Arbeitsmaschine 10 und die damit zusammenarbeitende Kommunikationsschnittstelle 106 des tragbaren Geräts 96 auf letzteres übertragen werden.

Die Positionsbestimmungseinrichtung 62 kann als Empfänger von Signalen eines satellitenbasieren Positionsbestimmungssystems (z.B. GPS, Galileo, Glonass) unter Verwendung von Korrektursignalen ausgeführt sein. Auch das Positionsbestimmungssystem 108 kann als Empfänger von Signalen eines satellitenbasieren Positionsbestimmungssystems (z.B. GPS, Galileo, Glonass) unter Verwendung von Korrektursignalen ausgeführt sein, oder es empfängt elektromagnetische Signale von erdgebundenen Referenzpunkten (z.B. Masten zur Abstrahlung von Mobilfunksignalen).

Bei einer anderen Ausführungsform wäre es auch denkbar, mehrere Sender an der Arbeitsmaschine 10 anzubringen, anhand derer das Positionsbestimmungssystem 108 die relative Lage des tragbaren Geräts 96 gegenüber der Arbeitsmaschine 10 identifiziert. Auch eine rein optische Detektion der Relativposition des tragbaren Geräts 96 gegenüber der Arbeitsmaschine 10 mittels der Kamera 110 wäre denkbar.

Das Erreichen der Referenzposition im Schritt S310 kann dadurch verifiziert werden, dass der Bediener, wenn er der Meinung ist, die Referenzposition erreicht zu haben, ein Foto mit der Kamera 110 macht. Der Prozessor 102 des tragbaren Geräts 96 vergleicht daraufhin das aufgenommene Foto (und insbesondere die erwähnte Markierung) mit einem abgespeicherten, erwarteten Foto und gibt einen Hinweis aus, wenn die Position korrekt ist und anderenfalls einen Fehlerhinweis mit (vorzugsweise aus dem aufgenommenen Foto und abgespeicherten Daten und/oder der mit dem Positionsbestimmungssystem 108 erfassten, aktuellen Position des tragbaren Geräts 96 abgeleiteten) Anweisungen an den Bediener, wie er das tragbare Gerät 96 weiter bewegen soll.

Nachdem die Referenzposition (Schritt S310) erreicht wurde, folgt der Schritt S312, in welchem der Bediener in der bezüglich des Schritts S312 beschriebenen Weise zur aufzusuchenden Position geleitet wird. Ist diese erreicht, was analog der zum Schritt S310 beschriebenen Vorgehensweise verifiziert werden kann, folgt der Schritt S314, in dem der Prozessor 102 auf der Anzeigeeinrichtung 100 Handlungsanweisungen anzeigt, die als Wort- und/oder Bilder dargestellt werden können. So kann er den Bediener anweisen, eine Steckverbindung 92, 94 zu prüfen oder einen Sensor 52, 58 zu reinigen oder einen Filter (nicht gezeigt) zu säubern.

Im folgenden Schritt S316 kann der Bediener kann in die berührungsempfindliche Anzeigeeinrichtung 100 des tragbaren Geräts 96 eingeben, ob er die vorgeschlagenen Arbeiten durchgeführt hat. Sollte das der Fall sein, folgt wieder der Schritt S304 und anderenfalls der Schritt S312, in dem das tragbare Gerät 96 den Bediener nunmehr zu einer anderen, aufzusuchenden Position leitet. So kann der Bediener nach und nach zu allen Steckverbindungen 92, 94 geführt werden, falls im Schritt S302 ein Fehler in der Busleitung 86 festgestellt wurde.

Im Schritt S316 kann die Prüfung, ob die Arbeiten erfolgreich durchgeführt wurden, alternativ oder zusätzlich durch den Bordcomputer 54 erfolgen. Beim Beispiel der fehlerhaften Busleitung 86 kann somit nach dem Prüfen der Steckverbindung 92 und einer Eingabe in das tragbare Gerät 96 letzteres eine entsprechende Bestätigung an dem Bordcomputer 54 geben (über die Kommunikationsschnittstelle 106 des tragbaren Geräts 96 und die damit zusammenarbeitende Kommunikationseinrichtung 66 der Arbeitsmaschine 10), welcher anschließend prüft, ob die Busleitung 86 nunmehr korrekt arbeitet. Sollte das der Fall sein, antwortet der Bordcomputer 54 an das tragbare Gerät 96 und es folgt nach einem entsprechenden Hinweis an den Bediener über die Anzeigeeinrichtung 98, dass die Arbeiten erfolgreich beendet sind, der Schritt S304, während anderenfalls der Schritt S312 nochmals erfolgt und der Bediener durch das tragbare Gerät 96 zur anderen Steckverbindung 94 geleitet wird. In analoger Weise kann der Bordcomputer 54 beispielsweise anhand der Signale der Kamera 68 auch prüfen, ob der Bediener ein Fenster der Kamera 68 im Falle einer Verschmutzung korrekt gereinigt hat oder dieser Vorgang wiederholt werden muss.

Nach alledem wird durch das erfindungsgemäß bereitgestellte und in der beschriebenen Weise programmierte tragbare Gerät 96 auch einem wenig erfahrenen Bediener ermöglicht, eine schwierig aufzufindende Position an der Arbeitsmaschine 10 oder einem damit verbundenen Gerät, wie dem Erntevorsatz 18, auf einfache Weise aufzusuchen und dort Arbeiten insbesondere zur Fehlerbehebung, Wartung oder Störungsbeseitigung durchzuführen. Das tragbare Gerät 96 kann auf interaktive Weise mit dem als Diagnosesystem dienenden Bordcomputer 54 zusammenarbeiten, um zu prüfen, ob die Arbeiten korrekt und erfolgreich durchgeführt wurden.

## Patentansprüche

1. Verfahren zur Führung eines Bedieners zu einer zu Fehlerbehebungs-, Störungsbeseitigungs- oder Wartungsarbeiten aufzusuchenden Position an einer mobilen Arbeitsmaschine (10) oder einem damit gekoppelten Gerät, mit folgenden Schritten:
Ermitteln von Daten hinsichtlich der aufzusuchenden Position an der Arbeitsmaschine (10) oder an dem damit gekoppelten Gerät unter Verwendung eines Diagnosesystems, und
Übertragen der Daten hinsichtlich der aufzusuchenden Position an ein tragbares Gerät (96),
**gekennzeichnet durch** den Schritt des Ausgebens von auf den Daten basierenden Richtungshinweisen durch das tragbare Gerät (96) im Sinne eines Hinführens des tragbaren Geräts (96) zur aufzusuchenden Position,
wobei der Schritt des Ausgebens von Richtungshinweisen beinhaltet, dass zunächst das tragbare Gerät (96) zu einem Referenzpunkt leitende Richtungshinweise ausgegeben werden, dass das Erreichen des Referenzpunktes mittels des tragbaren Geräts (96) verifiziert wird und dass schließlich das tragbare Gerät (96) ausgehend vom Referenzpunkt zur aufzusuchenden Position führende Richtungshinweise durch das tragbare Gerät (96) ausgegeben werden.

2. Verfahren nach Anspruch 1, wobei der Schritt des Verifizierens des Erreichens des Referenzpunkts ein Abfotografieren des Referenzpunkts durch das tragbare Gerät (96) und einen Vergleich mit aus dem aufgenommenen Foto abgeleiteten Daten mit abgespeicherten Daten beinhaltet.

3. Verfahren nach einem der Ansprüche 1 oder 2, wobei der Schritt des Ermittelns von Daten hinsichtlich der aufzusuchenden Position das Ermitteln mehrerer in Frage kommender Positionen beinhaltet.

4. Verfahren nach einem der Ansprüche 1 bis 3, wobei der Schritt des Übertragens von Daten hinsichtlich der aufzusuchenden Position an das tragbare Gerät (96) ein Anzeigen eines Codes auf einer mit dem Diagnosesystem verbundenen Anzeigeeinrichtung und ein Abfotografieren mit dem oder Eingeben des Codes in das tragbare Gerät (96) umfasst.

5. Verfahren nach einem der Ansprüche 1 bis 4, wobei das tragbare Gerät (96) und die Arbeitsmaschine (10) jeweils mit einem Positionsbestimmungssystem (62, 108) ausgestattet sind und das tragbare Gerät (96) Positionsdaten von der Arbeitsmaschine (10) erhält.

6. Verfahren nach einem der Ansprüche 1 bis 5, wobei das tragbare Gerät (96) nach dem Erreichen der aufzusuchenden Position Handlungsanweisungen an den Bediener wiedergibt.

7. Verfahren nach einem der Ansprüche 1 bis 6, wobei das tragbare Gerät (96) interaktiv mit dem Diagnosesystem zusammenarbeitet, um den Erfolg der durch den Bediener an der Position durchgeführten Arbeiten zu prüfen.

8. Kombination aus einer Arbeitsmaschine (10), welche mit einem Diagnosesystem ausgestattet ist, das programmiert ist, eine zu Fehlerbehebungs-, Störungsbeseitigungs- oder Wartungsarbeiten aufzusuchende Position an der Arbeitsmaschine (10) oder an einem damit gekoppelten Gerät zu berechnen, und einem tragbaren Gerät (96) zur Unterstützung des Auffindens einer zur Fehlerbehebungs-, Störungsbeseitigungs- oder Wartungsarbeiten aufzusuchenden Position an einer Arbeitsmaschine (10) oder einem damit gekoppelten Gerät, wobei ein Prozessor (102) des tragbaren Geräts (96) programmiert ist, Daten hinsichtlich der aufzusuchenden Position zu erhalten, **dadurch gekennzeichnet, dass** der Prozessor (102) des tragbaren Geräts (96) programmiert ist, basierend auf den empfangenen Daten hinsichtlich der aufzusuchenden Position Richtungshinweise im Sinne eines Hinführens des tragbaren Geräts (96) zur aufzusuchenden Position auszugeben und zunächst das tragbare Gerät (96) zu einem Referenzpunkt leitende Richtungshinweise auszugeben, das Erreichen des Referenzpunktes mittels des tragbaren Geräts (96) zu verifizieren und schließlich das tragbare Gerät (96) ausgehend vom Referenzpunkt zur aufzusuchenden Position führende Richtungshinweise durch das tragbare Gerät (96) auszugeben.

## Claims

1. Method for guiding an operator to a position on a mobile working machine (10) or a device which is coupled to said mobile working machine, which position is to be located for fault-remedying, defect-eliminating or maintenance work, comprising the following steps:
ascertaining data in respect of the position that is to be located on the working machine (10) or on the device which is coupled to said working machine using a diagnosis system, and
transmitting the data in respect of the position that is to be located to a portable device (96),
**characterized by** the step of outputting direction instructions, which are based on the data, by virtue of the portable device (96) for the purpose of guiding the portable device (96) to the position that is to be located,
wherein the step of outputting direction instructions includes direction instructions which lead the portable device (96) to a reference point first being output, the situation of the reference point being reached by means of the portable device (96) being verified and finally direction instructions which guide the portable device (96) from the reference point to the position that is to be located being output by the portable device (96).

2. Method according to Claim 1, wherein the step of verifying that the reference point has been reached includes the reference point being photographed by the portable device (96) and data which is derived from the photograph taken being compared with stored data.

3. Method according to either of Claims 1 and 2, wherein the step of ascertaining data in respect of the position that is to be located includes ascertaining a plurality of positions which come into question.

4. Method according to one of Claims 1 to 3, wherein the step of transmitting data in respect of the position that is to be located to the portable device (96) comprises displaying a code on a display device which is connected to the diagnosis system and a photograph being taken by or the code being input into the portable device (96) .

5. Method according to one of Claims 1 to 4, wherein the portable device (96) and the working machine (10) are each equipped with a position-determining system (62, 108), and the portable device (96) receives position data from the working machine (10).

6. Method according to one of Claims 1 to 5, wherein the portable device (96) shows procedural instructions to the operator after the position that is to be located has been reached.

7. Method according to one of Claims 1 to 6, wherein the portable device (96) cooperates with the diagnosis system in an interactive manner in order to check the success of the work which was carried out at the position by the operator.

8. Combination comprising a working machine (10) which is equipped with a diagnosis system which is programmed for calculating a position on the working machine (10) or on a device which is coupled to said working machine, which position is to be located for fault-remedying, defect-eliminating or maintenance work, and a portable device (96) for assisting in finding a position on a working machine (10) or a device which is coupled to said working machine, which position is to be located for fault-remedying, defect-eliminating or maintenance work, wherein a processor (102) of the portable device (96) is programmed to receive data in respect of the position that is to be located, **characterized in that** the processor (102) of the portable device (96) is programmed, on the basis of the received data in respect of the position that is to be located, to output direction instructions for the purpose of guiding the portable device (96) to the position that is to be located and to first output direction instructions which lead the portable device (96) to a reference point, to verify the situation of the reference point being reached by means of the portable device (96) and finally to output, by the portable device (96), direction instructions which guide the portable device (96) from the reference point to the position that is to be located.

## Revendications

1. Procédé de guidage d'un opérateur vers une localisation permettant d'effectuer un dépannage, un antiparasitage ou des travaux d'entretien sur une machine de travail mobile (10) ou un appareil couplé à celle-ci, comprenant les étapes suivantes :
déterminer des données relatives à la localisation à atteindre sur la machine de travail (10) ou l'appareil couplé à celle-ci en utilisant un système de diagnostic, et
transmettre les données relatives à la localisation à atteindre à un appareil portable (96),
**caractérisé par** l'étape de fourniture en sortie par l'appareil portable (96) d'indications de direction basées sur lesdites données dans le but de guider l'appareil portable (96) vers la localisation à atteindre, dans lequel l'étape de fourniture en sortie d'indications de direction comprend en premier lieu le fait que des indications de direction qui guident l'appareil portable (96) vers un point de référence sont fournies en sortie, la vérification du fait que le point de référence a été atteint au moyen de l'appareil portable (96) et enfin, le fait que des indications de direction qui guident l'appareil portable (96) du point de référence vers la localisation à atteindre sont fournies en sortie par l'appareil portable (96).

2. Procédé selon la revendication 1, dans lequel l'étape de vérification du fait que le point de référence a été atteint comprend la prise d'une photographie du point de référence par l'appareil portable (96) et une comparaison de données dérivées de la photographie prise avec des données stockées.

3. Procédé selon la revendication 1 ou 2, dans lequel l'étape de détermination de données relatives à la localisation à atteindre comprend la détermination de plusieurs localisations d'intérêt.

4. Procédé selon l'une des revendications 1 à 3, dans lequel l'étape de transmission de données relatives à la localisation à atteindre à l'appareil portable (96) comprend un affichage d'un code sur un dispositif d'affichage relié au système de diagnostic et la prise d'une photographie avec l'appareil portable (96) ou la saisie du code dans celui-ci.

5. Procédé selon l'une des revendications 1 à 4, dans lequel l'appareil portable (96) et la machine de travail (10) sont respectivement équipés d'un système de détermination de localisation (62, 108) et l'appareil portable (96) reçoit des données de localisation de la machine de travail (10).

6. Procédé selon l'une des revendications 1 à 5, dans lequel l'appareil portable (96) présente à l'opérateur des indications de manœuvre après que la localisation à atteindre a été atteinte.

7. Procédé selon l'une des revendications 1 à 6, dans lequel l'appareil portable (96) coopère de manière interactive avec le système de diagnostic pour vérifier la réussite des travaux effectués par l'opérateur à ladite localisation.

8. Combinaison d'une machine de travail (10) équipée d'un système de diagnostic programmé pour calculer une localisation afin d'effectuer un dépannage, un antiparasitage ou des travaux d'entretien sur la machine de travail (10) ou un appareil couplé à celle-ci, et d'un appareil portable (96) d'assistance à la détermination d'une localisation afin d'effectuer un dépannage, un antiparasitage ou des travaux d'entretien sur une machine de travail (10) ou un appareil couplé à celle-ci, dans lequel un processeur (102) de l'appareil portable (96) est programmé pour obtenir des données relatives à la localisation à atteindre, **caractérisée en ce que** le processeur (102) de l'appareil portable (96) est programmé pour fournir en sortie des indications de direction basées sur les données reçues relatives à la localisation à atteindre dans le but de guider l'appareil portable (96) vers la localisation à atteindre et pour fournir en sortie en premier lieu des indications de direction qui guident l'appareil portable (96) vers un point de référence, pour vérifier que le point de référence a été atteint au moyen de l'appareil portable (96) et enfin, pour faire en sorte que l'appareil portable (96) délivre des indications de direction qui guident l'appareil portable (96) du point de référence vers la localisation à atteindre.
